# EUROPÄISCHE PATENTSCHRIFT

(11) **EP 1 101 528 B1**
(45) Veröffentlichungstag und Bekanntmachung des Hinweises auf die Patenterteilung: **08.09.2004**
(21) Anmeldenummer: 00123288.3
(22) Anmeldetag: 27.10.2000
(51) Int. Cl.: B01J 23/00, B01J 23/02, B01J 23/10, B01J 37/02, B01J 37/08, B01D 53/94

(54) **Verfahren zur Herstellung eines Stickoxid-Speichermaterials und damit hergestelltes Speichermaterial**
Process for making a nitrogen oxide storage material and the material made by the said process
Procédé pour fabriquer un matériau d'accumulation des oxydes d'azote et matériau obtenu par ce procédé

(30) Priorität: 17.11.1999 DE 19955456
(43) Veröffentlichungstag der Anmeldung: 23.05.2001
(73) Patentinhaber: Umicore AG & Co. KG, 63457 Hanau-Wolfgang (DE)
(72) Erfinder: Göbel, Ulrich, Dr., 65795 Hattersheim (DE); Ruwisch, Lutz Marc, Dr., 64287 Darmstadt (DE); Kiessling, Ralph, Dr., 63694 Limeshain (DE); Foerster, Martin, Dr., 63654 Büdingen (DE)
(74) Vertreter: Stellbrink, Axel

(56) Entgegenhaltungen:
- EP-A- 0 624 399
- US-A- 4 368 142
- US-A- 5 024 985
- US-A- 5 874 057

## Beschreibung

Die Erfindung betrifft ein Verfahren zur Herstellung eines Stickoxid-Speichermaterials, welches wenigstens eine Speicherkomponente in Form von Partikeln eines Oxides, Carbonates oder Hydroxides der Elemente Magnesium, Strontium, Barium, Lanthan und Cer auf einem Trägermaterial aus der Gruppe dotiertes Ceroxid, Cer/Zirkon-Mischoxid und Aluminiumoxid oder Mischungen davon enthält.

Auf dem Sektor der Benzinmotoren wurden zur Verminderung des Kraftstoffverbrauchs sogenannte Magermotoren entwikkelt, die im Teillastbetrieb mit mageren Luft/Kraftstoffgemischen betrieben werden. Ein mageres Luft/Kraftstoffgemisch enthält eine höhere Sauerstoffkonzentration als für die vollständige Verbrennung des Kraftstoffes benötigt wird. Im entsprechenden Abgas liegen dann die oxidierenden Komponenten Sauerstoff (O₂), Stickoxide (NOₓ) im Überschuß gegenüber den reduzierenden Abgaskomponenten Kohlenmonoxid (CO), Wasserstoff (H₂) und Kohlenwasserstoffen (HC) vor. Mageres Abgas enthält gewöhnlich 3 bis 15 Vol.-% Sauerstoff. Innerhalb des Last- und Vollastbetriebs erfolgt aber auch bei mager betriebenen Ottomotoren eine stöchiometrische oder sogar unterstöchiometrische, das heißt fette, Luft/Kraftstoffaufbereitung.

Wegen des hohen Sauerstoffgehaltes des Abgases von Magermotoren oder Dieselmotoren können die in ihm enthaltenen Stickoxide nicht wie bei stöchiometrisch betriebenen OttoMotoren mit Hilfe von sogenannten Dreiweg-Katalysatoren unter gleichzeitiger Oxidation von Kohlenwasserstoffen und Kohlenmonoxid zu Stickstoff reduziert werden.

Zur Entfernung der Stickoxide aus diesen Abgasen wurden deshalb Stickoxid-Speicherkatalysatoren entwickelt, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält das Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial abgeschieden ist.

Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie das im Abgas enthaltene Stickstoffmonoxid zu Stickstoffdioxid oxidieren, damit es mit dem basischen Speichermaterial zu Nitraten reagieren kann. Mit zunehmender Einlagerung der Stickoxide ins Speichermaterial nimmt die Speicherkapazität des Materials ab und muß daher von Zeit zu Zeit regeneriert werden. Hierzu wird der Motor für kurze Zeit mit stöchiometrisch zusammengesetzten oder fetten Luft/Kraftstoff-Gemischen betrieben. Unter den reduzierenden Bedingungen im fetten Abgas werden die gebildeten Nitrate zu Stickoxiden NOₓ zersetzt und unter Verwendung von Kohlenmonoxid, Wasserstoff und Kohlenwasserstoffen als Reduktionsmittel zu Stickstoff unter Bildung von Wasser und Kohlendioxid reduziert. Der Speicherkatalysator arbeitet während dieser Betriebsphase als Dreiwegkatalysator.

In der Patentliteratur sind verschiedene Kombinationen von Speicherkomponenten und Trägermaterialien bekannt geworden. So beschreibt die EP 0 562 516 A1 einen Katalysator aus Bariumoxid, Lanthanoxid und Platin auf einem Trägermaterial aus Aluminiumoxid, Zeolith, Zirkonoxid, Aluminiumsilicat oder Siliciumdioxid, wobei wenigstens ein Teil des Bariumoxids und des Lanthanoxids ein Mischoxid bilden. Durch dieses Mischoxid soll die Bildung von Lanthanaluminat unterdrückt werden, die ansonsten zur Alterung des Katalysators führt. Zur Herstellung des Katalysators wird ein wabenförmiger Tragkörper zunächst mit einer Aluminiumoxiddispersion beschichtet, getrocknet und calciniert. Anschließend wird die Beschichtung sequentiell oder simultan mit einer Lanthansalzlösung und einer Bariumsalzlösung imprägniert, getrocknet und bei 300°C für die Dauer von einer Stunde calciniert. Danach wird die Beschichtung mit einer Platinsalzlösung imprägniert, erneut getrocknet und calciniert.

Die EP 0 653 238 A1 schlägt als Trägermaterial Titanoxid vor, welches wenigstens ein Element aus der Gruppe der Alkalimetalle, der Erdalkalimetalle und der Seltenerdmetalle in Form einer festen Lösung enthält. Zur Herstellung dieses Speichermaterials wird Titanoxid mit einer Lösung von Vorläuferverbindungen der Speicherkomponenten imprägniert und anschließend bei Temperaturen oberhalb 600°C zur Bildung der festen Lösung calciniert.

Die EP 0 666 103 A1 beschreibt einen Katalysator, welcher auf einem porösen Trägermaterial eine Stickoxid-Speicherkomponente und ein Edelmetall enthält. Als Trägermaterial werden Aluminiumoxid, Zeolith, Zirkonoxid, Aluminiumsilicat und Siliciumdioxid vorgeschlagen. Stickoxid-Speicherkomponente und Edelmetall werden eng benachbart auf denselben Trägerpartikeln abgeschieden. Darüber hinaus kann der Katalysator noch Ceroxid als Sauerstoff-Speicherkomponente enthalten, wobei Ceroxid vom Edelmetall und damit auch von der Speicherkomponente separiert gehalten wird. Zur Abscheidung der Speicherkomponenten und der Edelmetalle auf dem Trägermaterial wird es mit Lösungen von Vorstufen dieser Komponenten imprägniert und calciniert.

Die WO 97/02886 beschreibt einen Stickoxid-Speicherkatalysator, in welchem Metalloxide, Metallhydroxide, Metallcarbonate und Metall-Mischoxide als Speicherkomponenten eingesetzt werden. Die Metalle können Lithium, Natrium, Kalium, Rubidium, Cäsium, Magnesium, Calcium, Strontium oder Barium sein. Die Speicherkomponenten werden entweder in Pulverform eingesetzt oder auf Aluminiumoxid durch Imprägnieren mit Vorläuferverbindungen der Speicherkomponenten abgeschieden. Das imprägnierte Aluminiumoxidpulver wird für die Dauer von 2 Stunden bei 550°C calciniert.

Die DE 197 13 432 A1 beschreibt ein katalytisches Basismaterial für einen Abgasreinigungskatalysator, welches durch Imprägnieren von Ceroxidpulver mit einer Barium enthaltenden Lösung und Calcinieren der Ceroxidteilchen bei etwa 400 bis 1100°C zum Bilden und Anreichern von Bariumoxiden an den Oberflächen der Ceroxidteilchen erhalten wird. Gemäß dieser Schrift wird ein Gemisch aus Bariumoxiden und Ceroxidteilchen auf eine relativ hohe Temperatur erhitzt, um beabsichtigt grobkörnige Bariumoxide an den Oberflächen der Ceroxidteilchen zu bilden. Hierfür sind Temperaturen von 800 bis 1100°C wirkungsvoll. Bevorzugt werden die Ceroxidteilchen bei 900°C für die Dauer von 24 Stunden calciniert. Hierbei ergeben sich Korngrößen der Bariumoxidteilchen zwischen 7 und 14 µm. Bei einer Calciniertemperatur von 200°C weisen die Bariumoxidteilchen noch eine mittlere Korngröße von 1,9 µm auf.

Das katalytische Basismaterial gemäß der DE 197 13 432 A1 dient zur Herstellung eines Katalysators, welcher besonders wirkungsvoll ist, wenn er an einem Motor mit Magerverbrennung betrieben wird. Bei diesem Katalysator handelt es sich also um einen sogenannten Lean-NOₓ-Katalysator, welcher bei Vorhandensein von ausreichenden, reduktiven Abgaskomponenten (Kohlenmonoxid und Kohlenwasserstoffe) in der Lage ist, Stickoxide auch im konstant mageren Abgas umzusetzen. Das katalytische Basismaterial erhöht die Temperaturbeständigkeit des Katalysators. Über eine mögliche Stickoxid-Speicherfähigkeit des katalytischen Basismaterials macht die DE 197 13 432 A1 keine Angaben.

Bei den bekannten Verfahren zur Herstellung von Stickoxid-Speichermaterialien wird also das vorgesehene Trägermaterial in der Regel mit löslichen Vorstufen der Speicherkomponenten konventionell imprägniert, anschließend getrocknet und calciniert. Wie sorgfältige Untersuchungen der Erfinder gezeigt haben, treten beim Trocknen und Calcinieren chromatografische Effekte auf, die dazu führen, dass die Speicherkomponenten sich auf der Oberfläche der Trägermaterialien zu größeren Partikeln mit Durchmessern zwischen mehreren hundert Nanometern bis zu Mikrometern zusammenlagern. Ein extremes Beispiel stellt die DE 197 13 432 A1 dar, in der die Bariumoxidpartikel mehrere Mikrometer Durchmesser besitzen und somit in der gleichen Größenordnung liegen wie das verwendete Trägermaterial.

Eine weitere Wirkung der bekannten Herstellverfahren ist die Agglomeration und Versinterung der Pulverpartikel des Speichermaterials infolge des engen Kontaktes zwischen den Pulverpartikeln und den hohen Temperaturen im Calcinierofen. Das calcinierte Material läßt sich daher nicht direkt auf die vorgesehenen Tragkörper aufbringen, sondern es muss vor der Beschichtung in einem längeren und energieintensiven Prozess sorgfältig vermahlen werden.

Die Untersuchungen der Erfinder zeigen, daß das dynamische Speicherverhalten der so hergestellten Speichermaterialien durch die relative groben Partikel der Speicherkomponenten nachteilig beeinflusst wird. Durch die geringe Oberfläche der groben Partikel ist die Wechselwirkung mit dem Abgas behindert und die Stickoxide müssen lange Diffusionswege in den Partikeln zurücklegen. Gleiches gilt auch für die Regeneration der Speicherkomponenten, so dass diese Vorgänge mit zunehmender Partikelgröße der Speicherkomponenten verlangsamt werden. In der Anwendung am Kraftfahrzeug hat dies zur Folge, daß die Rate der Abspeicherung der Stickoxide relativ rasch abnimmt und schon lange vor Erreichen der durch die Gesamtmasse der Speicherkomponenten gegebenen theoretischen Speicherkapazität die Regeneration der Speichermaterialien eingeleitet werden muss.

Auch die Vergiftung der Speicherkomponenten durch Bildung von Sulfaten unterliegt den soeben beschriebenen Abhängigkeiten von der Partikelgröße der Speicherkomponenten. Dies führt zwar zu einer langsameren Vergiftung, die notwendige Desulfatisierung wird aber durch diese Zusammenhänge ebenfalls deutlich erschwert.

Es ist daher Aufgabe der vorliegenden Erfindung, ein Verfahren zur Herstellung eines Stickoxid-Speichermaterials anzugeben, welches sich durch einen hohen, nutzbaren Speicherwirkungsgrad, eine gute Dynamik der Speicher- und Regenerationszyklen und durch eine leichte Desulfatisierung auszeichnet.

Diese Aufgabe wird durch ein Verfahren zur Herstellung eines Stickoxid-Speichermaterials gelöst, welches wenigstens eine Speicherkomponente in Form von Partikeln eines Oxides, Carbonates oder Hydroxides der Elemente Magnesium, Strontium, Barium, Lanthan und Cer auf einem Trägermaterial aus der Gruppe dotiertes Ceroxid, Cer/Zirkon-Mischoxid und Aluminiumoxid oder Mischungen davon enthält. Das Verfahren umfasst folgende Schritte:
a) Erzeugen eines heißen Gasstromes;
b) Suspendieren des Trägermaterials in einer wässrigen Lösung von Vorstufen der Speicherkomponenten;
c) Einführen der Suspension in den heißen Gasstrom bei einer Temperatur zwischen 700 und 1100°C, so dass während einer Verweilzeit der Suspension im heißen Gasstrom von weniger als einer Minute das Lösungsmittel der Suspension verdampft und die Vorstufen der Speicherkomponenten thermisch zersetzt und in die Speicherkomponenten umgewandelt werden; und
d) Abtrennen des so gebildeten Speichermaterials vom Strom heißer Gase.

Zum Unterschied zu den bekannten Verfahren wird also das Speichermaterial nicht durch eine langsame Trocknung und anschließende Calcinierung hergestellt, wobei diese Prozesse teilweise mehrere Stunden in Anspruch nehmen, sondern die Suspension des Trägermaterials in der Lösung von Vorstufen der Speicherkomponenten wird in einen heißen Gasstrom eingedüst. Trocknung und Calcinierung des sich bildenden Speichermaterials erfolgen dabei in einem Zeitraum von weniger als einer Minute.

Der heiße Gasstrom wird bevorzugt durch einen Brenner erzeugt und dann durch ein Reaktionsrohr geführt. Die Kombination aus Brenner und Reaktionsrohr wird im folgenden auch als Reaktor bezeichnet.

Die in die Verbrennungsgase eingedüste Suspension wird von diesen Gasen getragen. Während der Verweilzeit im heißen Gasstrom wird das Lösungsmittel der Suspension verdampft. Die Vorstufen der Speicherkomponenten werden thermisch zersetzt und in die eigentlichen Speicherverbindungen umgewandelt. Das so gebildete und calcinierte Speichermaterial wird nach Verlassen des Reaktionsrohres vom heißen Gasstrom durch Filter oder andere Abscheider abgetrennt.

Die Verweilzeit der Suspension in den heißen Verbrennungsgasen kann durch Wahl der Massenströme eingestellt werden. Angestrebt werden Verweilzeiten von weniger als einer Minute. Bevorzugt werden Verweilzeiten von weniger als 10 Sekunden eingestellt. In der Praxis wurden sogar Verweilzeiten von unter einer Sekunde realisiert. Die Brennertemperatur muss dabei so gewählt werden, dass trotz der kurzen Verweilzeiten die gewünschte, thermische Zersetzung der Vorläuferverbindungen der Speicherkomponenten stattfinden kann. Hierzu haben sich Temperaturen zwischen 700 und 1100°C als günstig erwiesen. Solche Temperaturen können zum Beispiel mit einem mit Erdgas und Luft betriebenen Brenner erzeugt werden. Der Brenner wird dabei mit einem überstöchiometrischen Luft/Brennstoff -Gemisch mit Luftzahlen Lambda größer als 1 betrieben, um die Bildung der oxidischen Speicherverbindungen zu begünstigen.

Während der kurzen Verweilzeiten im heißen Gasstrom können sich chromatografische Effekte noch nicht vollständig ausbilden, so dass eine Agglomeration der Speicherkomponenten auf der Oberfläche des Trägermaterials zu größeren Partikeln unterbleibt. Je nach gewünschter Beladung des Trägermaterials wird daher eine hochdisperse Abscheidung der Speicherkomponenten oder - bei hohen Beladungen - eine geschlossene Beschichtung auf der Oberfläche des Trägermaterials beobachtet.

Das Herstellverfahren führt also zu einer hohen Oberfläche der Speicherkomponenten und damit zu einer guten Zugänglichkeit der Speicherkomponenten und Ausnutzbarkeit ihrer Speicherkapazität durch das Abgas. Die theoretische Speicherkapazität des Speichermaterials ergibt sich aus der molaren Menge der Speicherkomponenten, mit der das Trägermaterial beladen wird. Diese maximale Speicherkapazität kann um so besser ausgenutzt werden, je größer die Wechselwirkungsoberfläche der Speicherkomponenten mit dem Abgas ist.

Bei der beschriebenen Calcinierung werden die Partikel des Speichermaterials von den heißen Abgasen des Brenners getragen. Dies kann als Flugstromcalcinierung bezeichnet werden. Bei der Flugstromcalcinierung haben die Partikel des Speichermaterials untereinander nur einen geringen Kontakt. Ein Agglomerieren und Versintern der Partikel kann hierbei nicht auftreten. Dies garantiert über die schon beschriebenen Effekte hinaus eine gute Zugänglichkeit der Speicherkomponenten für das zu reinigende Abgas. Außerdem kann der Aufwand für die Vermahlung des Speichermaterials vor dem Beschichten der vorgesehenen Tragkörper gegenüber dem Stand der Technik verringert werden.

Die Eindüsung der Suspension kann an verschiedenen Stellen des Reaktors erfolgen. Bevorzugt wird die Suspension direkt in die Flamme des Brenners eingedüst. Es besteht jedoch auch die Möglichkeit, die Suspension an einer Position längs des Reaktionsrohres in den heißen Gasstrom einzudüsen. In beiden Fällen besteht die Möglichkeit, der Suspension des Trägermaterials Lösungen von Vorstufen der Platingruppenmetalle aus der Gruppe Platin, Palladium, Rhodium und Iridium zur Dotierung des sich bildenden Speichermaterials mit diesen Metallen zuzufügen.

Bevorzugt wird jedoch die Eindüsung von Lösungen von Vorstufen der genannten Platingruppenmetalle separat erst nach der Eindüsung der Suspension vorgenommen. Hierdurch wird erreicht, daß die Platingruppenmetalle nicht von den Speicherkomponenten begraben werden, sondern sich auf der Oberfläche der schon gebildeten Partikel der Speicherkomponenten abscheiden. Durch Wahl des Versatzes zwischen der Eindüsung der Suspension und der Lösung der Platingruppenmetalle kann dieser Vorgang beeinflusst werden. Bevorzugt düst man die Suspension direkt in die Flamme des Brenners ein und fügt die Lösung mit den Vorstufen der Platingruppenmetalle erst an einer Position längs des Reaktionsrohres dem heterogenen Reaktionsgemisch zu. Hierbei wird das Reaktionsgemisch durch die Verdampfungswärme des Lösungsmittels abgekühlt. Zur Kompensation der Abkühlung kann das Reaktionsrohr in geeigneter Weise beheizt werden.

Das beschriebene Herstellverfahren ermöglicht es also, ein katalysiertes Speichermaterial in einem Arbeitsgang herzustellen.

Als Trägermaterial für die Speicherkomponenten eignen sich aktive Aluminiumoxide, durch Dotierung stabilisiertes Ceroxid und Cer/Zirkon-Mischoxide. Diese Trägermaterialien weisen bevorzugt spezifische Oberflächen im Frischzustand von oberhalb 10 bis 400 m²/g auf.

Zur Stabilisierung gegenüber Temperaturbelastungen wird Ceroxid mit Oxiden der Elemente aus der Gruppe gebildet aus Silicium, Scandium, Yttrium und den Seltenerdmetallen (Lanthan, Praseodym, Neodym, Promethium, Samarium, Europium, Gadolinium, Terbium, Dysprosium, Holmium, Erbium, Thulium, Ytterbium und Luthetium) oder Mischungen ihrer Oxide stabilisiert. Hierzu sind 0,5 bis 20, bevorzugt 5 bis 10 Gew.-%, des jeweiligen Oxids oder der Oxidmischung notwendig. Die Konzentrationsangabe bezieht sich hierbei auf das Gesamtgewicht des Trägermaterials. Die Dotierung kann nach an sich bekannten Verfahren, wie zum Beispiel Co-Fällen, Co-Thermohydrolyse, Imprägnieren und Auffällen, erfolgen.

Cer/Zirkon-Mischoxide sind kommerziell mit einem weiten Mischungsverhältnis von Ceroxid zu Zirkonoxid erhältlich und finden ebenso wie reines Ceroxid weite Verbreitung als Sauerstoff-Speichermaterialien in konventionellen Dreiweg-Katalysatoren. Die Herstellung der Cer/Zirkon-Mischoxide kann zum Beispiel über mechanisches Mischen oder Imprägnierungs- und Co-Fällungstechniken erfolgen. Im Rahmen der vorliegenden Erfindung sind die hervorragenden Eigenschaften dieser Materialien als Trägermaterialien für die Speicherkomponenten wichtig. Ihre Sauerstoffspeicherfähigkeit ist von geringerer Bedeutung.

Besonders günstige Eigenschaften als Trägermaterialien für Speicherkomponenten weisen die Cer/Zirkon-Mischoxide dann auf, wenn der Gehalt des Mischoxides an Zirkonoxid 25, bevorzugt 20 Gew.-%, bezogen auf das Gesamtgewicht des Mischoxides, nicht übersteigt. Um dem Ceroxid eine ausreichende Stabilität gegenüber reduzierenden Abgasbedingungen zu verleihen, sollte der Gehalt des Mischoxides an Zirkonoxid jedoch 1 Gew.-% nicht unterschreiten. Besonders vorteilhaft sind Zirkonoxidgehalte zwischen 5 und 15 Gew.-%. Sehr gute Ergebnisse konnten mit einem Gehalt von 10 Gew.-% Zirkonoxid erzielt werden.

Auch die Cer/Zirkon-Mischoxide können zusätzlich durch Dotieren mit den im Falle von Ceroxid genannten Verbindungen stabilisiert werden.

Als Vorläuferverbindungen der Speicherkomponenten eignen sich alle in Wasser löslichen Verbindungen der Komponenten, die sich unter den beschriebenen Reaktionsbedingungen zu den entsprechenden Oxiden umsetzen lassen. Besonders geeignet sind Nitrate und Acetate.

Bei der Lösung von Vorstufen der Platingruppenmetalle kann es sich um wäßrige oder nicht wäßrige (organische) Lösungen handeln. Eine Vielzahl von Vorstufen können eingesetzt werden, vorausgesetzt sie sind im gewählten Lösungsmittel löslich und zersetzen sich unter den Reaktionsbedingungen im Reaktor. Beispielhaft für Platin sind Hexachloroplatinsäure, Ammoniumchloroplatinat, Platintetrachloridhydrat, Platinnitrat, Platintetraamminnitrat und andere. Bevorzugte Vorstufen sind Platinnitrat und Methylethanolamin-Platin (IV) Hexahydroxid ((MEA)₂Pt(OH)₆ = ((OH-C₂H₄-NH₂-CH₃)₂⁺Pt^{IV}(OH)₆) und Ethanolamin-Platin (IV) Hexahydroxid ((EA)₂Pt(OH)₆ = (OH-C₂H₄-NH₃)₂⁺Pt^{IV}(OH)₆) oder andere organische Abkömmlinge von quaternären Ammoniumsalzen.

Vorstufen von Rhodium sind Hexaammin-Rhodiumchlorid, Rhodiumchlorid, Rhodiumnitrat, Rhodiumacetat und andere. Für Palladium wird bevorzugt Palladiumnitrat eingesetzt.

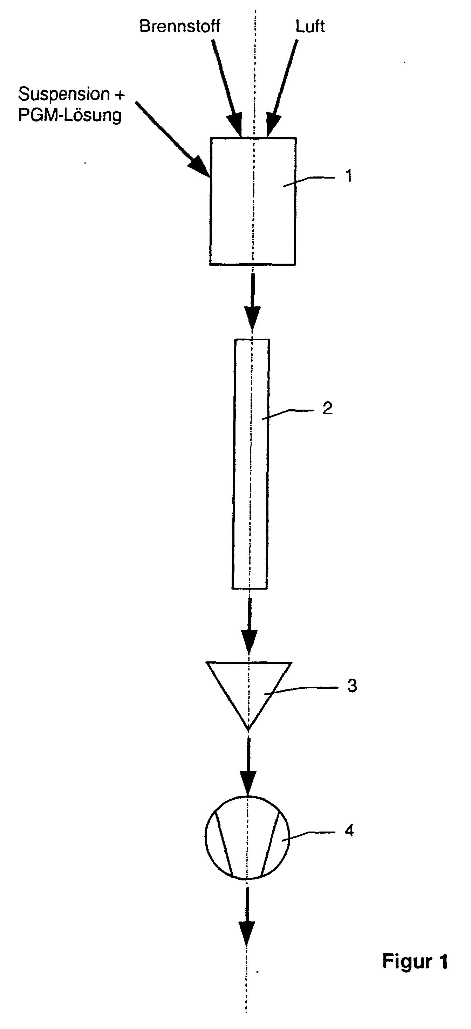

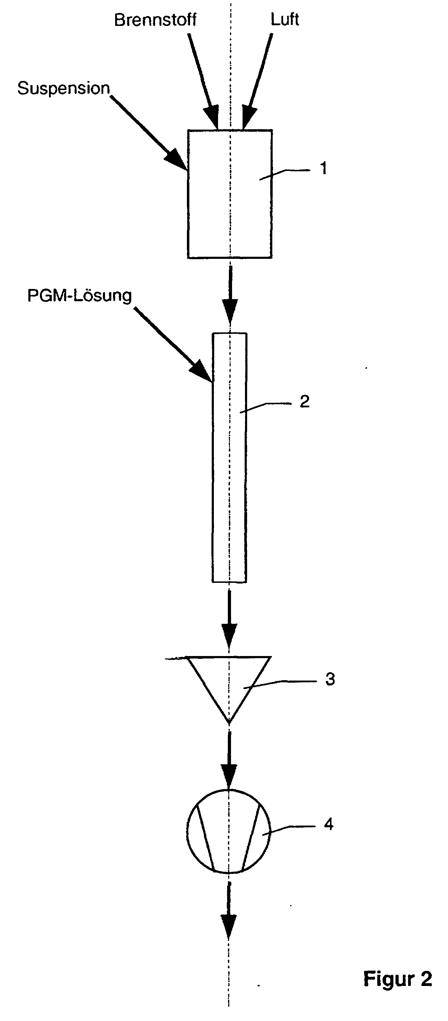

Die Figuren 1 und 2 zeigen einen Reaktor zur Durchführung des erfindungsgemäßen Verfahrens. Die Bezugsziffer (1) bezeichnet die Brennkammer, in der ein Brennstoff, in der Regel Erdgas, unter Zuführung von Luft verbrannt wird. Die heißen Verbrennungsgase werden dann durch ein Reaktionsrohr (2) geführt. Nach dem Verlassen des Reaktionsrohres wird das gebildete Speichermaterial in einem Filter oder Abscheider (3) vom heißen Gasstrom abgetrennt. Bezugsziffer (4) bezeichnet ein Gebläse.

Der Brenner kann eine bekannte Bauart mit pulsierender Verbrennung aufweisen. Ein derartiger Brenner wird in der Patentschrift DD 114 454 beschrieben. Bevorzugt wird ein Brenner mit hoher Turbulenz zur Verbesserung der Stoffdurchmischung eingesetzt.

Wie Figur 1 zeigt, kann eine Mischung aus der Suspension des Trägermaterials und der Lösung von Vorstufen der Platingruppenmetalle (PGM-Lösung) direkt in die Brennkammer des Reaktors eingedüst werden. Soll vermieden werden, dass die Platingruppenmetalle von den Speicherkomponenten umhüllt, beziehungsweise von den Speicherkomponenten begraben werden, so kann, wie in Figur 2 gezeigt, eine separate Zugabe der Platingruppenmetalle vorgesehen werden. Gemäß Figur 2 wird die Suspension des Trägermaterials der Brennkammer zugeführt. Die Lösung der Platingruppenmetalle wird dagegen erst in das Reaktionsrohr eingedüst. Je nach Position der Eindüsung längs des Reaktionsrohres kann erreicht werden, daß sich die Platingruppenmetalle auf den schon gebildeten Speicherkomponenten abscheiden.

Für die Zubereitung der Suspension des Trägermaterials wird zunächst eine Lösung der Vorstufen der Speicherkomponenten angefertigt. In dieser Lösung wird dann das Trägermaterial suspendiert. Die fertige Suspension kann einen Feststoffgehalt von 60 Gew.-%, bezogen auf das Gesamtgewicht der Suspension, und mehr aufweisen. Bevorzugt werden Feststoffgehalte von 50 Gew.-% eingesetzt. Diese Suspension wird mit üblichen Einstoff- oder Zweistoffdüsen in die heißen Gase eingedüst.

## Patentansprüche

1. Verfahren zur Herstellung eines Stickoxid-Speichermaterials, welches wenigstens eine Speicherkomponente in Form von Partikeln eines Oxides, Carbonates oder Hydroxides der Elemente Magnesium, Strontium, Barium, Lanthan und Cer auf einem Trägermaterial aus der Gruppe Aluminiumoxid, durch Dotierung stabilisiertes Ceroxid und Cer/Zirkon-Mischoxid oder Mischungen davon enthält,
wobei das Verfahren die Schritte umfaßt:
a) Erzeugen eines heißen Gasstromes;
b) Suspendieren des Trägermaterials in einer wässrigen Lösung von Vorstufen der Speicherkomponenten;
c) Einführen der Suspension in den heißen Gasstrom bei einer Temperatur zwischen 700 und 1100°C, so dass während einer Verweilzeit der Suspension im heißen Gasstrom von weniger als einer Minute das Lösungsmittel der Suspension verdampft und die Vorstufen der Speicherkomponenten thermisch zersetzt und in die Speicherkomponenten umgewandelt werden; und
d) Abtrennen des so gebildeten Speichermaterials vom Strom heißer Gase.

2. Verfahren nach Anspruch 1, wobei
der heiße Gasstrom von einem Brenner erzeugt und dann. durch ein Reaktionsrohr geführt wird.

3. Verfahren nach Anspruch 2, wobei
der Brenner überstöchiometrisch mit einer Luftzahl Lambda größer als 1 betrieben wird.

4. Verfahren nach Anspruch 3, wobei
die Suspension in die Flamme des Brenners eingedüst wird.

5. Verfahren nach Anspruch 3, wobei
die Suspension an einer Position längs des Reaktionsrohres in den heißen Gasstrom eingedüst wird.

6. Verfahren nach einem der vorstehenden Ansprüche, wobei
der Suspension des Trägermaterials eine Lösung von Vorstufen der Platingruppenmetalle aus der Gruppe Platin, Palladium, Rhodium und Iridium zur Dotierung des sich bildenden Speichermaterials mit diesen Metallen zugefügt wird.

7. Verfahren nach Anspruch 4, wobei
wobei eine Lösung von Vorstufen der Platingruppenmetalle aus der Gruppe Platin, Palladium, Rhodium und Iridium zur Dotierung des sich bildenden Speichermaterials mit diesen Metallen an einer Position längs des Reaktionsrohres in das Reaktionsgemisch aus heißen Gasen und Suspension eingedüst wird.

8. Verfahren nach Anspruch 7, wobei
das Reaktionsrohr zum Ausgleich der Verdampfungswärme der Lösung beheizt wird.

9. Speichermaterial enthaltend wenigstens eine Speicherkomponente in Form von Partikeln eines Oxides, Corbonates oder Hydroxides der Elemente Magnesium, Strontium, Barium, Lanthan und Cer auf einem Trägermaterial aus der Gruppe dotiertes Ceroxid, Cer/Zirkon-Mischoxid und Aluminiumoxid oder Mischungen davon,
erhältlich durch
ein Verfahren nach einem der Ansprüche 1 bis 8.

10. Speichermaterial nach Anspruch 9, wobei
es, bezögen auf das Gesamtgewicht des Speichermaterials, 10 bis 45 Gew.-% an Speicherkomponenten enthält.

## Claims

1. A method for the preparation of a nitrogen oxide storage material, which contains at least one storage component in the form of particles of an oxide, carbonate or hydroxide of the elements magnesium, strontium, barium, lanthanum and cerium on a support material selected from the group consisting of aluminum oxide, cerium oxide stabilized by doping and cerium/zirconium mixed oxide or mixtures thereof, wherein the method comprises the steps of:
a) generating a hot gas stream;
b) suspending the support material in an aqueous solution of precursors of the storage components;
c) introducing the suspension into the hot gas stream at a temperature between 700 and 1100°C, so that during a dwell time of the suspension in the hot gas stream of less than one minute, the solvent of the suspension evaporates and the precursors of the storage components thermally decompose and are converted into the storage components; and
d) separating the thus formed storage material from the stream of hot gases.

2. The method according to claim 1, wherein the hot gas stream is generated by a burner and is subsequently passed through a reaction tube.

3. The method according to claim 2, wherein the burner is operated superstoichiometrically with a lambda number greater than 1.

4. The method according to claim 3, wherein the suspension is injected into the flame of the burner.

5. The method according to claim 3, wherein the suspension is injected into the hot gas stream at a position along the length of the reaction tube.

6. The method according to any one of the preceeding claims, wherein a solution of precursors of the platinum group metals selected from the group consisting of platinum, palladium, rhodium and iridium are added to the suspension of the support material in order to dope the storage material that forms with said metals.

7. The method according to claim 4, wherein a solution of precursors of the platinum group metals selected from the group consisting of platinum, palladium, rhodium and iridium is injected into the reaction mixture of hot gases and suspension at a position along the length of the reaction tube in order to dope the storage material that forms with said metals.

8. The method according to claim 7, wherein the reaction tube is heated in order to compensate the heat of evaporation of the solution.

9. A storage material containing at least one storage component in the form of particles of an oxide, carbonate or hydroxide of the elements magnesium, strontium, barium, lanthanum and cerium on a support material selected from the group consisting of doped cerium oxide, cerium/zirconium mixed oxide and aluminum oxide or mixtures thereof which is obtainable by a method according to any one of claims 1 to 8.

10. The storage material according to claim 9, containing 10 to 45 wt.-% of storage components with respect to the total weight of the storage material.

## Revendications

1. Procédé pour fabriquer un matériau accumulateur d'oxydes d'azote qui contient au moins un composant accumulateur sous la forme de particules d'un oxyde, d'un carbonate ou d'un hydroxyde des éléments magnésium, strontium, baryum, lanthane et cérium sur un matériau support choisi du groupe de l'oxyde d'aluminium, de l'oxyde de cérium stabilisé par dopage et de l'oxyde mixte de cérium et de zirconium ou de mélanges de ceux-ci, le procédé présentant les étapes suivantes :
a) production d'un courant de gaz chaud ;
b) mise en suspension du matériau support dans une solution aqueuse de précurseurs des composants accumulateurs ;
c) introduction de la suspension dans le courant de gaz chaud à une température comprise entre 700 et 1100°C de sorte que pendant un temps de séjour de la suspension inférieur à une minute dans le courant de gaz chaud, le solvant de la suspension est vaporisé et les précurseurs des composants accumulateurs sont décomposés thermiquement et transformés en les composants accumulateurs ; et
d) séparation du matériau accumulateur ainsi formé du courant de gaz chaud.

2. Procédé selon la revendication 1,
dans lequel
le courant de gaz chaud est produit par un brûleur puis passe dans un tube de réaction.

3. Procédé selon la revendication2,
dans lequel
le brûleur fonctionne dans des conditions suprastoechiométriques avec un indice d'air lambda supérieur à 1.

4. Procédé selon la revendication 3,
dans lequel
la suspension est injectée dans la flamme du brûleur.

5. Procédé selon la revendication 3,
dans lequel
la suspension est injectée dans le courant de gaz chaud en un point situé le long du tube de réaction.

6. Procédé selon une des revendications précédentes,
dans lequel
une solution de précurseurs des métaux du groupe de platine choisi du groupe platine, palladium, rhodium et iridium est ajoutée à la suspension du matériau support pour doper par ces métaux le matériau accumulateur qui se forme.

7. Procédé selon la revendication 4,
dans lequel
une solution de précurseurs des métaux du groupe platine choisi du groupe platine, palladium, rhodium et iridium est injectée en un point situé le long du tube de réaction dans le mélange réactionnel constitué des gaz chauds et de la suspension pour doper par ces métaux le matériau accumulateur qui se forme.

8. Procédé selon la revendication 7,
dans lequel
le tube de réaction est chauffé pour compenser la chaleur de vaporisation de la solution.

9. Matériau accumulateur contenant au moins un composant accumulateur sous la forme de particules d'un oxyde, d'un carbonate ou d'un hydroxyde des éléments magnésium, strontium, baryum, lanthane et cérium, sur un matériau support choisi du groupe de l'oxyde de cérium dopé, de l'oxyde mixte de cérium et de zirconium et de l'oxyde d'aluminium ou des mélanges de ceux-ci, qui peut être obtenu par un procédé selon une des revendications 1 à 8.

10. Matériau accumulateur selon la revendication 9,
contenant,
par rapport au poids total du matériau accumulateur, 10 à 45 % de composants accumulateurs.
